# EUROPEAN PATENT APPLICATION

(11) **EP 4 773 219 A1**
(43) Date of publication of application: **08.07.2026**
(21) Application number: 23951299.9
(22) Date of filing: 28.10.2023
(51) Int. Cl.: H01M 4/139

(54) **ELECTRODE SHEET PREPARATION METHOD, ELECTRODE SHEET, BATTERY, AND ELECTRIC DEVICE**

(30) Priority: 08.09.2023 CN 202311157136
(71) Applicant: Contemporary Amperex Technology Co., Limited, Ningde, Fujian 352100 (CN)
(72) Inventor: ZHANG, Xinhui, Ningde, Fujian 352100 (CN); XING, Qi, Ningde, Fujian 352100 (CN); LIU, Huihui, Ningde, Fujian 352100 (CN); ZHANG, Zhenxu, Ningde, Fujian 352100 (CN)
(74) Representative: Gong, Jinping
(86) International application number: PCT/CN2023/127417
(87) International publication number: WO 2025/050483

(57) **Abstract**

The present application relates to the technical field of batteries, and in particular, to a preparation method for an electrode sheet, an electrode sheet, a battery, and an electric device. The preparation method for an electrode sheet includes: preparing an active layer comprising an active material and a binder on at least one side of a current collector; performing a heating treatment on the active layer to cause a temperature of a surface layer of the active layer to rise to a heating temperature; and performing a thermal insulation treatment on the active layer to cause the surface layer of the active layer to be at a thermal insulation temperature, where each of the heating temperature and the thermal insulation temperature is separately higher than or equal to a melting point or a softening point of the binder and lower than a decomposition temperature of the binder. The electrode sheet prepared by the method of the present application may enable a battery using the electrode sheet to have good cycling performance.

## Description

### TECHNICAL FIELD

The present application relates to the technical field of batteries, and in particular, to a preparation method for an electrode sheet, an electrode sheet, a battery, and an electric device.

### BACKGROUND

With the application of batteries in increasingly more scenarios, the market imposes increasingly high requirements on various performances of the batteries. The battery life is one of the key properties that affect the use experience of various electric devices. Therefore, prolonging the battery life is the key to promote further development of the batteries.

An electrode, which is an important constituent part of a battery, has a critical impact on the battery life. Thus, the battery life may be improved by improving the electrode. However, during the cycling of the battery, the performance of the electrode tends to deteriorate, resulting in poor cycling performance, thereby shortening the battery life.

### SUMMARY

In view of the above problem, the present application provides a preparation method for an electrode sheet, an electrode sheet, a battery, and an electric device, which can solve the problem of poor battery cycling performance.

According to a first aspect, the present application provides a preparation method for an electrode sheet, including:
preparing an active layer including an active material and a binder on at least one side of a current collector;
performing a heating treatment on the active layer to cause a temperature of a surface layer of the active layer to rise to a heating temperature; and
performing a thermal insulation treatment on the active layer to cause the surface layer of the active layer to be at a thermal insulation temperature, where
each of the heating temperature and the thermal insulation temperature is separately higher than or equal to a melting point or a softening point of the binder and lower than a decomposition temperature of the binder.

The electrode sheet prepared by the method of the embodiments of the present application may enable a battery using the electrode sheet to have good cycling performance. This is mainly thanks to the following:
(1) In the preparation method of the embodiments of the present application, the heating treatment is performed on the active layer to cause the temperature of the surface layer of the active layer to rise to the melting point or the softening point of the binder or a temperature above it, so that the binder enters a melted or softened state. Moreover, performing the thermal insulation treatment at a temperature in the same range can promote a molecular chain of the binder in the melted or softened state to move again, thereby facilitating the uniform distribution of the binder in the active layer, facilitating the release of stress in the electrode sheet, increasing cohesion and adhesion of the electrode sheet, and eventually improving the cycling performance of the battery.
(2) The redistribution of the binder includes penetration of the binder on the surface layer of the active layer into the active layer, which facilitates reducing the binder on the surface layer of the active layer, increasing the porosity of the surface layer of the active layer, increasing the rate of absorbing an electrolyte solution by the electrode sheet, causing the electrode sheet to be in full contact with the electrolyte solution and thus effectively participate in an electrochemical reaction, reducing internal resistance of the battery during a charge-discharge cycle, and thereby improving the cycling performance of the battery.
(3) Temperatures during both the heating and the thermal insulation are lower than the decomposition temperature of the binder, so that the binder does not decompose (ablate) during both the heating and the thermal insulation, which facilitates maintaining the total amount of the binder in the active layer, thus improving the cohesion and adhesion of the electrode sheet. Moreover, the active material is subjected to no impact of a decomposition product of the binder during the heating and thermal insulation, thereby further improving the cycling performance of the battery.
(4) During the heating and thermal insulation, moisture and residual impurities adsorbed in the active layer are volatilized, which facilitates reducing reactions between the moisture in the electrode sheet and lithium salt in the electrolyte solution, thereby improving interfacial stability of the electrode sheet, and improving the cycling performance of the battery.

In some embodiments, each of the heating temperature and the thermal insulation temperature is separately lower than or equal to an average of the melting point or the softening point of the binder and the decomposition temperature of the binder. In this way, the binder does not decompose (ablate) during both the heating and the thermal insulation, which facilitates maintaining the total amount of the binder in the active layer, thus improving the cohesion and adhesion of the electrode sheet, and avoiding the impact of a decomposition residue of the binder on the active material. Moreover, at this temperature, the binder can maintain a high viscosity and have fluidity that is not too large, which facilitates maintaining structural stability of the electrode sheet.

In some embodiments, duration of the thermal insulation treatment is greater than or equal to 0.1 s, optionally 0.1-2.5 s. Through the thermal insulation treatment of the duration, there is enough time for the binder in the melted or softened state on the surface layer to penetrate into the active layer, thereby balancing the distribution of the binder in the active layer.

In some embodiments, the thermal insulation temperature is lower than or equal to the heating temperature. The thermal insulation temperature being equal to or lower than the heating temperature may maintain the melted or softened state of the binder, so that the binder is in a flowable state with a high viscosity, and the fluidity of the binder is not too large, which facilitates maintaining the structural stability of the electrode sheet, thereby avoiding the problem of shedding.

In some embodiments, the melting point or the softening point of the binder is 140-180°C, the decomposition temperature of the binder is 300-350°C, and each of the heating temperature and the thermal insulation temperature is separately 170-230°C, optionally 190-230°C. For different binders, the heating temperature and the thermal insulation temperature may be set within appropriate ranges. Within the above ranges of the heating temperature and thermal insulation temperature, the binder may be melted or softened without decomposition, and the active material is free of interference with residues of the binder, which facilitates maintaining structure and performance stability of the active material.

In some embodiments, the active material includes lithium nickel cobalt manganese oxide; and optionally, in the lithium nickel cobalt manganese oxide, a molar ratio of Ni, Co, and Mn is (1-8):(1-2):(1-3). The method of the embodiments of the present application may be used to prepare different lithium nickel cobalt manganese oxide positive electrode sheets, and the stability of the lithium nickel cobalt manganese oxide may be maintained during preparation, so that the obtained battery has good cycling performance.

In some embodiments, a number average molecular weight of the binder is (35-150)×10⁴, optionally (45-150)×10⁴. Generally, there is a relationship between the melting point or the softening point and the molecular weight of the binder. Within the range of the number average molecular weight, the binder has a low melting point or softening point, which facilitates performing the steps of heating and thermal insulation of the embodiments of the present application at low temperatures.

In some embodiments, each of the heating treatment and the thermal insulation treatment separately includes a radiation treatment with laser light. The laser light used as a heating source has the characteristics of a high energy density in short time and high heating efficiency, and may cause the temperature of the active layer to quickly rise to a desired temperature. Moreover, the radiation with laser light also has the characteristics of a controllable power, a controllable wavelength, and high stability, which can effectively control the temperature of the active layer within a desired range.

In some embodiments, the laser light includes one or both of infrared wavelength laser light and near-infrared wavelength laser light, and optionally, the wavelength of the laser light is 1000 nm to 15 µm. The electrode sheet has strong absorptivity for infrared light and near-infrared light, and the radiation with laser light in the wavelength range has very high photothermal conversion efficiency, which may cause the temperature of the active layer to rise to a desired temperature in short time.

In some embodiments, a laser light power in the step of the heating treatment is 2000-4500 W, optionally 2000-4000 W. Performing the heating treatment with high-power laser light facilitates a quick temperature rise of the active layer.

In some embodiments, a laser light power in the step of the thermal insulation treatment is 80-200 W, optionally 100-150 W. Performing the thermal insulation treatment with low-power laser light may maintain the temperature of the surface layer of the active layer within a desired temperature range, thus avoiding overheating.

In some embodiments, the preparation method for an electrode sheet further includes a step of a compaction treatment on the electrode sheet after the thermal insulation treatment. In the step of the heating treatment and the step of the thermal insulation treatment, the binder in the active layer is redistributed, and the moisture and impurities absorbed in the active layer are volatilized, which may cause a change in the thickness of the electrode sheet. Therefore, after the thermal insulation treatment, the compaction treatment is performed, which facilitates the control of the thickness of the electrode sheet, for example, the thickness of the electrode sheet may be enabled to be consistent before and after the heating treatment and the thermal insulation treatment.

According to a second aspect, the present application provides an electrode sheet, which is obtained by the preparation method according to the first aspect.

In the electrode sheet of the embodiments of the present application, the binder is uniformly distributed, so that the electrode sheet has high adhesion, high porosity, and low moisture content, and may still maintain good structural stability after long-time charge-discharge cycles, which facilitates improving the cycling performance of the battery using the electrode sheet.

According to a third aspect, the present application provides a battery including the electrode sheet according to the second aspect.

The electrode sheet mentioned above has high adhesion, high porosity, low moisture content, and good structural stability, and the battery including the electrode sheet also presents good cycling performance and has a long battery life.

According to a fourth aspect, the present application provides an electric device including the battery according to the third aspect.

The battery disclosed in the embodiments of the present application may be used in an electric device which uses a battery as a power supply or various energy storage systems each using a battery as an energy storage component, so as to provide electric energy. The battery mentioned above has the advantages of good cycling performance and long life, and therefore, the use of the battery in various electric devices facilitates improving the use experience of various electric devices.

### DESCRIPTION OF DRAWINGS

To describe technical solutions in embodiments of the present application more clearly, the following briefly describes the accompanying drawings for describing the embodiments or the prior art. It is clear that the accompanying drawings described in the following are merely some embodiments of the present application. Those skilled in the art can still derive other figures from the these figures without creative efforts.
FIG. 1 is a schematic diagram of a battery cell according to an implementation of the present application;
FIG. 2 is an exploded view of the battery cell shown in FIG. 1 according to an implementation of the present application;
FIG. 3 is a schematic diagram of a battery module according to an implementation of the present application;
FIG. 4 is a schematic diagram of a battery pack according to an implementation of the present application;
FIG. 5 is an exploded view of the battery pack shown in FIG. 4 according to an implementation of the present application;
FIG. 6 is a schematic diagram of an electric device using a battery as a power supply according to an implementation of the present application;
FIG. 7 illustrates test results of cycling performance of a lithium ion battery in Example 1 and Comparative Example 1 of the present application;
FIG. 8 is an XRD diagram of a lithium nickel cobalt manganese oxide positive electrode sheet before and after a heating treatment and a thermal insulation treatment according to Example 1 of the present application; and
FIG. 9 is SEM diagram of the lithium nickel cobalt manganese oxide positive electrode sheet before and after the heating treatment and the thermal insulation treatment according to Embodiment 1 of the present application.

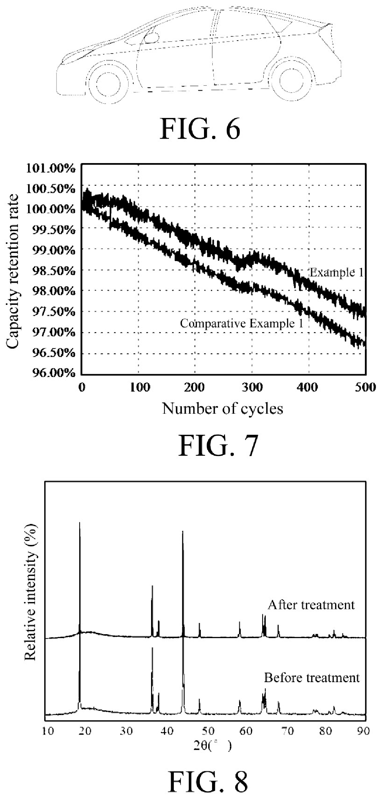

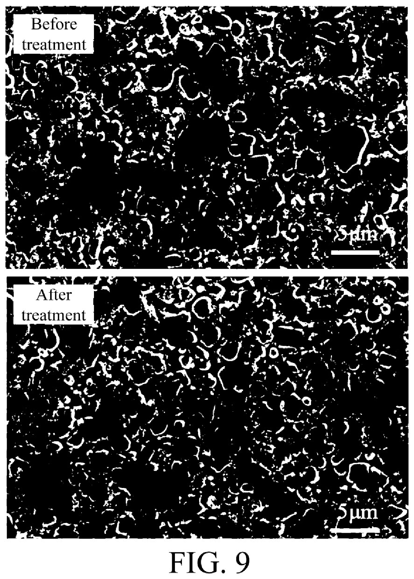

In FIGS. 8 and 9, "before treatment" refers to "before the heating treatment and the thermal insulation treatment are performed", and "after treatment" refers to "after the heating treatment and the thermal insulation treatment are performed".

### Reference signs:

01 - housing, 02 - cover plate, 03 - electrode assembly, 04 - battery cell, 05 - battery module, 06 - upper case, 07 - lower case.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "at least one" means one or more, and "a plurality of" means two or more. "At least one of the following" or similar expressions refers to any combination of the listed items, including any combination of singular or plural items. For example, "at least one of a, b, or c" or "at least one of a, b, and c" may refer to a, b, c, a-b (i.e., a and b), a-c, b-c, or a-b-c, where a, b, and c each may be singular or plural.

It should be understood that, in the embodiments of the present application, sequence numbers of the foregoing processes do not mean execution sequences, and some or all of the steps may be executed in parallel or sequentially. The execution sequences of the processes should be determined according to functions and internal logic of the processes, and should not be construed as any limitation on the implementation processes of the embodiments of the present application.

A weight of a relevant component mentioned in the description of the embodiments of the present application may not only indicate the specific content of each component, but also indicate a ratio relationship between weights of the components. Therefore, it is within the scope disclosed in the description of the embodiments of the present application to scale up or down the content of the relevant component according to the description of the embodiments of the present application. Specifically, the mass described in the description of the embodiments of the present application may be a mass unit known in the chemical industry, such as µg, mg, g, and kg.

An electrode, which is an important constituent part of a battery, has a critical impact on the battery life. However, during the cycling of the battery, the performance of the electrode tends to deteriorate, resulting in poor cycling performance of the battery.

Important constituent parts of the electrode include an active material, a binder, and the like, which have important impacts on the performance of the electrode. For example, lithium nickel cobalt manganese oxide is an excellent positive electrode active material for a lithium ion battery, and has been widely used in the power fields such as passenger vehicles and commercial vehicles in recent years. Compared with the lithium iron phosphate material, the lithium ion battery using lithium nickel cobalt manganese oxide as the positive electrode has a larger energy density and better quick charge and low temperature performance. However, it is found in practice that, due to the impact of a synthesis process, for example, an excessive amount of lithium source is usually used in the process of synthesizing the lithium nickel cobalt manganese oxide, the lithium nickel cobalt manganese oxide contains much residual alkali, such as lithium oxide and lithium carbonate. The presence of the residual alkali causes the lithium nickel cobalt manganese oxide to easily absorb moisture in the air, and after a secondary battery is assembled, the moisture reacts with lithium salt in an electrolyte solution, causing the battery to produce a gas, and thereby deteriorating the cycling performance of the battery.

Moreover, after the active material, the binder, etc. are jointly made into the active layer of the electrode sheet, the phenomenon such as poor binder distribution, non-uniform porosity distribution, or excessively low porosity often occurs, which also affects the cycling performance of the battery.

In order to improve the cycling performance of the battery, various technical means have been studied in the related art. For example, by forming a coating layer on the surface of the active material, an interfacial interaction of the active material during the cycling of the battery is improved, thereby improving the cycling performance of the battery. However, the presence of the coating layer may be detrimental to the electron or ion conductivity of the electrode sheet, resulting in high internal resistance of the battery, and thereby deteriorating the cycling performance of the battery. For another example, the electrode sheet is prepared by means of ray radiation, so as to reducing the aging of the binder in the electrode sheet and improve the stability of the electrode sheet, thereby improving the cycling performance of the battery. However, the ray radiation may cause distortion of a crystal form of the active material, and an organic substance in the electrode sheet may react to form residual free radicals during the radiation, thereby deteriorating the capacity of the electrode sheet, making it difficult to effectively improve the cycling performance of the battery.

In order to solve the above problems, in the embodiments of the present application, by performing a heating treatment and a thermal insulation treatment on the electrode sheet during the preparation of the electrode sheet and controlling a heating temperature and a thermal insulation temperature within a range, the structure of the electrode sheet may be improved, including balancing the distribution of the binder in the electrode sheet, improving the porosity of the electrode sheet, reducing the moisture of the electrode sheet, and the like, and maintaining the stability of the active material, thereby improving the cycling performance of the battery.

The electrode sheet treated by the method mentioned above may be used to fabricate a battery, and thus is used in various electric devices including, but not limited to, a mobile phone, a tablet computer, a notebook computer, an electric toy, an electric tool, an electromobile, an electric vehicle, a ship, a spacecraft, and the like.

The present application is further described below with reference to the embodiments. It should be understood that these embodiments are merely used to describe the present application and are not intended to limit the scope of the present application.

### [Preparation method for an electrode sheet]

According to a first aspect, the embodiments of the present application provide a preparation method for an electrode sheet, including:
preparing an active layer including an active material and a binder on at least one side of a current collector;
performing a heating treatment on the active layer to cause a temperature of a surface layer of the active layer to rise to a heating temperature; and
performing a thermal insulation treatment on the active layer to cause the surface layer of the active layer to be at a thermal insulation temperature, where
each of the heating temperature and the thermal insulation temperature is separately higher than or equal to a melting point or a softening point of the binder and lower than a decomposition temperature of the binder.

In the preparation method for an electrode sheet of the embodiments of the present application, the surface layer of the active layer refers to an outermost layer of the active layer in contact with the outside. Generally, the electrode sheet includes a current collector and the active layer disposed on at least one side of the current collector, and therefore, the surface layer of the active layer is also generally a surface layer of the electrode sheet. Typically, a region within 40% of the thickness of the electrode sheet along a thickness direction of the electrode sheet from outside to inside may be regarded as the surface layer of the electrode sheet.

The softening point is a temperature at which a three-dimensional remote ordered state of a macromolecular chain structure of a non-crystalline polymer is converted into a disordered viscous state. The melting point is a temperature at which a three-dimensional remote ordered state of a macromolecular chain structure of a crystalline polymer is converted into a disordered viscous state, and is a lower limit of a molding machining temperature of the crystalline polymer. Typically, a range of the melting point is relatively narrow, and a range of the softening point is relatively broad. The decomposition temperature refers to a temperature at which a molecular chain of a polymer in a viscous state degrades more seriously when the temperature further rises and even significantly degrades.

The electrode sheet prepared by the method of the embodiments of the present application may enable a battery using the electrode sheet to have good cycling performance. This is mainly thanks to the following:
(1) In the preparation method of the embodiments of the present application, the heating treatment is performed on the active layer to cause the temperature of the surface layer of the active layer to rise to the melting point or the softening point of the binder or a temperature above it, so that the binder enters a melted or softened state. Moreover, performing the thermal insulation treatment at a temperature in the same range can promote a molecular chain of the binder in the melted or softened state to move again, thereby facilitating the uniform distribution of the binder in the active layer, facilitating the release of stress in the electrode sheet, increasing cohesion and adhesion of the electrode sheet, and eventually improving the cycling performance of the battery.
(2) The redistribution of the binder includes penetration of the binder on the surface layer of the active layer into the active layer, which facilitates reducing the binder on the surface layer of the active layer, increasing the porosity of the surface layer of the active layer, increasing the rate of absorbing an electrolyte solution by the electrode sheet, causing the electrode sheet to be in full contact with the electrolyte solution and thus effectively participate in an electrochemical reaction, reducing internal resistance of the battery during a charge-discharge cycle, and thereby improving the cycling performance of the battery.
(3) Temperatures during both the heating and the thermal insulation are lower than the decomposition temperature of the binder, so that the binder does not decompose (ablate) during both the heating and the thermal insulation, which facilitates maintaining the total amount of the binder in the active layer, thus improving the cohesion and adhesion of the electrode sheet. Moreover, the active material is subjected to no impact of a decomposition product of the binder during the heating and thermal insulation, thereby further improving the cycling performance of the battery.
(4) During the heating and thermal insulation, moisture and residual impurities adsorbed in the active layer are volatilized, which facilitates reducing reactions between the moisture in the electrode sheet and lithium salt in the electrolyte solution, thereby improving interfacial stability of the electrode sheet, and improving the cycling performance of the battery.

In some implementations, each of the heating temperature and the thermal insulation temperature is separately lower than or equal to an average of the melting point or the softening point of the binder and the decomposition temperature of the binder. In this way, the binder does not decompose (ablate) during both the heating and the thermal insulation, which facilitates maintaining the total amount of the binder in the active layer, thus improving the cohesion and adhesion of the electrode sheet, and avoiding the impact of a decomposition residue of the binder on the active material. Moreover, at this temperature, the binder can maintain a high viscosity and have fluidity that is not too large, which facilitates maintaining structural stability of the electrode sheet.

In some implementations, duration of the thermal insulation treatment is greater than or equal to 0.1 s, optionally 0.1-2.5 s, for example, it may be any point value of or a range value between any two of 0.1 s, 0.2 s, 0.4 s, 0.6 s, 0.8 s, 1 s, 1.2 s, 1.4 s, 1.6 s, 1.8 s, 2 s, 2.2 s, and 2.5 s. Through the thermal insulation treatment of the duration, there is enough time for the binder in the melted or softened state on the surface layer to penetrate into the active layer, thereby balancing the distribution of the binder in the active layer.

In some implementations, duration of the heating treatment is 0.05-0.3 s, for example, any point value of or a range value between any two of 0.05 s, 0.1 s, 0.15 s, 0.2 s, 0.25 s, and 0.3 s. The duration of the heating treatment is duration for the temperature of the surface layer of the active layer to rise to the heating temperature. The rate of the temperature rise affects the homogeneity of the material. In the embodiments of the present application, through the quick temperature rise, the binder on the surface layer of the active layer may be quickly converted from a solid state into a melted or softened state; moreover, it also facilitates quickly transferring heat into the active layer, so that the binder inside the active layer is also quickly melted or softened to join the binder on the surface layer, thereby promoting uniform distribution of the binder in the active layer.

In some implementations, the thermal insulation temperature is lower than or equal to the heating temperature, and optionally, the thermal insulation temperature is lower than the heating temperature. The thermal insulation temperature being equal to or lower than the heating temperature may maintain the melted or softened state of the binder, so that the binder is in a flowable state with a high viscosity, and the fluidity of the binder is not too large, which facilitates maintaining the structural stability of the electrode sheet, thereby avoiding the problem of shedding.

In some implementations, the melting point or the softening point of the binder is 140-180°C, the decomposition temperature of the binder is 300-350°C, and each of the heating temperature and the thermal insulation temperature is separately 170-230°C, optionally 190-230°C, for example, any point value of or a range value between any two of 170°C, 180°C, 190°C, 200°C, 210°C, 220°C, and 230°C. Optionally, the heating temperature may be set to 180-230°C, and the thermal insulation temperature may be set to 180-200°C.

The heating temperature and the thermal insulation temperature may be measured via an infrared temperature measurement instrument or other temperature meters. For different binders, the heating temperature and the thermal insulation temperature may be set within appropriate ranges. Within the above ranges of the heating temperature and thermal insulation temperature, the binder may be melted or softened without decomposition, and the active material is free of interference with residues of the binder, which facilitates maintaining structure and performance stability of the active material.

In some implementations, the active material includes lithium nickel cobalt manganese oxide; and optionally, in the lithium nickel cobalt manganese oxide, a molar ratio of Ni, Co, and Mn is (1-8):(1-2):(1-3), for example, it may be any point value of or a range value between any two of 8:1:1, 8:1.5:0.5, 6:2:2, 5:2:3, 5:3:2, and 1:1:1. The method of the embodiments of the present application may be used to prepare different lithium nickel cobalt manganese oxide positive electrode sheets, and the stability of the lithium nickel cobalt manganese oxide may be maintained during preparation, so that the obtained battery has good cycling performance.

In some implementations, the melting point or the softening point of the binder is 140-180°C, optionally 150-180°C, for example, any point value of or a range value between any two of 140°C, 150°C, 160°C, 170°C, and 180°C. With the use of the binder having a low melting point or low softening point, the binder may be melted or softened by performing heating and thermal insulation for the active layer at low temperatures, achieving redistribution of the binder, which facilitates reducing the temperatures during the heating and the thermal insulation, so as to reduce the probability of structural damage of the lithium nickel cobalt manganese oxide, thereby facilitating the improvement of cycling stability of the electrode sheet.

In some implementations, the decomposition temperature of the binder is 300-350°C, optionally 300-320°C, for example, any point value of or a range value between any two of 3000°C, 310°C, 320°C, 330°C, 340°C, and 350°C. Both of the heating temperature and the thermal insulation temperature are lower than the decomposition temperature of the binder. Performing heating and thermal insulation for the active layer at temperatures lower than the decomposition temperature can not only melt or soften the binder to achieve the redistribution of the binder, but also reduce the probability of the structural damage of the lithium nickel cobalt manganese oxide, thereby facilitating the improvement of the cycling stability of the electrode sheet.

In some implementations, a number average molecular weight of the binder may be set to be (35-150)×10⁴, optionally, (45-150)×10⁴, for example, any point value of or a range value between any two of 35×10⁴, 40×10⁴, 45×10⁴, 50×10⁴, 60×10⁴, 70×10⁴, 80×10⁴, 90×10⁴, 100×10⁴, 120×10⁴, 140×10⁴, and 150×10⁴. The number average molecular weight is a representation of the size of a molecule, and is a total weight of all molecules in a polymer sample divided by a total number of the molecules. The number average molecular weight of the binder may be measured by gel permeation chromatography (GPC) using polystyrene (PS) as a standard sample. Generally, there is a relationship between the melting point or the softening point and the molecular weight of the binder. Within the range of the number average molecular weight, the binder has a low melting point or softening point, which facilitates performing the steps of heating and thermal insulation of the embodiments of the present application at low temperatures.

As an example, the binder may include one or more of polyvinylidene fluoride, polyvinylidene fluoride, polyimide, polytetrafluoroethylene, polybutyl acrylate, and polyacrylonitrile, and optionally includes polyvinylidene fluoride.

In some implementations, the active layer further includes a conductive agent, where the conductive agent includes one or more of conductive carbon black, carbon nanotube, and graphene. Such the conductive agent can transfer heat from the surface layer of the active layer into the active layer through electrons, so that the positive electrode sheet is heated uniformly, which facilitates the uniform distribution of the binder in the entire active layer.

A mass content of each material in the active layer may be set as needed.

For example, the mass content of the active material in the active layer may include, but is not limited to, 90-98%, for example, 95-98%, e.g., any point value of or a range value between any two of 90%, 91%, 92%, 93%, 94%, 95%, 96%, 97%, and 98%.

The mass content of each of the binder and the conductive agent in the active layer may separately include, but is not limited to, 0.5-5%, for example, 1-5%, e.g., any point value of or a range value between any two of 0.5%, 1%, 1.5%, 2%, 2.5%, 3%, 3.5%, 4%, 4.5%, and 5%.

In some implementations, each of the heating treatment and the thermal insulation treatment separately includes a radiation treatment with laser light.

The radiation treatment with laser light is to generate a laser beam using a laser and then performing radiation with the laser beam. The laser light used as a heating source has the characteristics of a high energy density in short time and high heating efficiency, and may cause the temperature of the active layer to quickly rise to a desired temperature. Moreover, the radiation with laser light also has the characteristics of a controllable power, a controllable wavelength, and high stability, which can effectively control the temperature of the active layer within a desired range.

Each of the heating treatment and the thermal insulation treatment uses radiation with laser light. In a practical operation, at least one set of lasers may be used to perform the heating treatment on the active layer, and at least another set of lasers may be used to perform the thermal insulation treatment. In the heating treatment or the thermal insulation treatment, a laser may be disposed on one side or each of two sides of the electrode sheet, and optionally, lasers are disposed on the two sides of the electrode sheet respectively, so as to perform heating and thermal insulation for two surface layers of the active layer.

In some implementations, the laser light includes one or both of infrared wavelength laser light and near-infrared wavelength laser light. Optionally, the wavelength of the laser light is 1000 nm to 15 µm, optionally 1000-3000 nm, for example, any point value of or a range value between any two of 1000 nm, 1200 nm, 1400 nm, 1600 nm, 1800 nm, 2000 nm, 2200 nm, 2400 nm, 2600 nm, 2800 nm, 3000 nm, 5000 nm, 1 µm, 5 µm, 10 µm, and 15 µm. The wavelength of the laser light is mainly related to the type of an excitation medium of the laser, and therefore, different wavelengths of the laser light may be obtained by selecting different excitation media of the laser. The infrared wavelength laser light refers to laser light having a wavelength of 0.76-100 µm, and the near-infrared wavelength laser light refers to laser light having a wavelength of 780-3000 nm. The electrode sheet has strong absorptivity for infrared light and near-infrared light, and the radiation with laser light in the wavelength range has very high photothermal conversion efficiency, which may cause the temperature of the active layer to rise to a desired temperature in short time.

In some implementations, the laser generating the laser light includes one or more of a neodymium-doped yttrium aluminum garnet crystal (Nd:YAG) laser, an ytterbium-doped yttrium aluminum garnet crystal (Yb:YAG) laser, a fiber laser, a CO₂ laser, and an antimony arsenide laser. These lasers can generate infrared wavelength laser light or near-infrared wavelength laser light, for example, the Nd:YAG laser can emit laser light having a wavelength of 1064 nm, the Yb:YAG laser can emit laser light having a wavelength of 1030 nm, and the fiber laser can emit laser light having a wavelength of 1080 nm.

In some implementations, a laser light power in the step of the heating treatment is 2000-4500 W, optionally 2000-4000 W, for example, any point value of or a range value between any two of 2000 W, 2200 W, 2400 W, 2600 W, 2800 W, 3000 W, 3200 W, 3400 W, 3600 W, 3800 W, 4000 W, 4200 W, and 4500 W. The laser light power may be set directly in the laser. Performing the heating treatment with high-power laser light facilitates a quick temperature rise of the active layer.

In some implementations, a laser light power in the step of the thermal insulation is 800-200 W, optionally 100-150 W, for example, any point value of or a range value between any two of 80 W, 100 W, 120 W, 140 W, 150 W, 160 W, 180 W, and 200 W. Performing the thermal insulation treatment with low-power laser light may maintain the temperature of the surface layer of the active layer within a desired temperature range, thus avoiding overheating.

In some implementations, each of the heating treatment step and the thermal insulation treatment step separately includes a step of moving the electrode sheet relative to the laser. Optionally, a moving speed is 20-200 m/min, further optionally 20-60 m/min, for example, it may be any point value of or a range value between any two of 20 m/min, 30 m/min, 40 m/min, 50 m/min, 60 m/min, 70 m/min, 80 m/min, 90 m/min, 100 m/min, 120 m/min, 140 m/min, 160 m/min, 180 m/min, and 200 m/min. In the preparation method of the embodiments of the present application, the heating treatment and the thermal insulation treatment may be dynamic, the electrode sheet moves relative to the laser, and performing the short-time heating treatment and the short-time thermal insulation treatment on the electrode sheet with the laser light may cause the temperature of the active layer to rise and may reduce heat accumulation at the same time, thereby reducing unnecessary side reactions.

In some implementations, the radiation treatment with laser light includes one or both of a radiation treatment with pulsed laser light and a radiation treatment with continuous laser light. The pulsed laser light refers to a light pulse emitted by a laser in a pulsed operation mode, where there is an interval between two adjacent light pulses. The continuous laser light is continuous, unintermittent laser light emitted by a continuous laser. Both of the radiation with pulsed laser light and the radiation with continuous laser light may enable the active layer to reach a desired temperature in short time and maintained at the desired temperature.

In some implementations, the preparation method for an electrode sheet further includes a step of a compaction treatment on the electrode sheet after the thermal insulation treatment. In the step of the heating treatment and the step of the thermal insulation treatment, the binder in the active layer is redistributed, and the moisture and impurities absorbed in the active layer are volatilized, which may cause a change in the thickness of the electrode sheet. Therefore, after the thermal insulation treatment, the compaction treatment is performed, which facilitates the control of the thickness of the electrode sheet, for example, the thickness of the electrode sheet may be enabled to be consistent before and after the heating treatment and the thermal insulation treatment. The compaction treatment may be performed at a room temperature or at a high temperature, for example, the temperature of the compaction treatment may be 25-130°C, e.g., any point value of or a range value between any two of 25°C, 30°C, 40°C, 50°C, 60°C, 70°C, 80°C, 90°C, 100°C, 120°C, and 130°C.

In addition, in the preparation method for an electrode sheet, a preparation method for the active layer including the active material and the binder may be performed according to the following steps: mixing the active material and the binder with a solvent to obtain a paste; and applying the paste to at least one surface of the current collector, followed by drying and compaction, to obtain the active layer.

### [Electrode sheet]

According to a second aspect, the embodiments of the present application provide an electrode sheet, which is obtained by the preparation method according to the first aspect.

In the electrode sheet of the embodiments of the present application, the binder is uniformly distributed, so that the electrode sheet has high adhesion, high porosity, and low moisture content, and may still maintain good structural stability after long-time charge-discharge cycles, which facilitates improving the cycling performance of the battery using the electrode sheet.

It may be understood that, in terms of the structure, the electrode sheet may include a current collector and an active layer disposed on at least one surface of the current collector, where the active layer includes an active material and a binder. Meanwhile, the electrode sheet may be prepared by the preparation method according to the first aspect.

In some implementations, the adhesion of the electrode sheet is greater than or equal to 25 N/m, optionally 25-28 N/m, for example, any point value of or a range value between any two of 25 N/m, 26 N/m, 27 N/m, and 28 N/m. The adhesion of the electrode sheet may be obtained by a test with a high-iron tensile machine. The electrode sheet of the embodiments of the present application has high adhesion, which facilitates maintaining the stability of the electrode sheet during the cycling of the battery, thereby improving the cycling performance of the battery.

In some implementations, a moisture content of the electrode sheet is ≤ 60 ppm, optionally 25-60 ppm, for example, any point value of or a range value between any two of 25 ppm, 30 ppm, 35 ppm, 40 ppm, 45 ppm, 50 ppm, 55 ppm, and 60 ppm. The moisture content of the electrode sheet refers to a mass content of moisture in the electrode sheet, which can be measured by a moisture meter. The case of a low moisture content facilitates reducing reactions between the moisture in the electrode sheet and lithium salt in the electrolyte solution, thereby improving interfacial stability of the electrode sheet, and improving the cycling performance of the battery.

### [Battery]

According to a third aspect, the embodiments of the present application provide a battery including the electrode sheet according to the second aspect.

The electrode sheet mentioned above has high adhesion, high porosity, low moisture content, and good structural stability, and the battery including the electrode sheet also presents good cycling performance and has a long battery life.

The active material in the electrode sheet may include a lithium nickel cobalt manganese oxide positive electrode material, and the electrode sheet thus may be used as a positive electrode of the battery.

Generally, the battery may further include a negative electrode sheet, an electrolyte, a separator, an outer package, and the like. Moreover, the battery of the embodiments of the present application may include one or more of a battery cell, a battery module, and a battery pack.

### 1. Negative electrode sheet

The negative electrode sheet may include a negative electrode current collector and a negative electrode active layer which is disposed on at least one side of the negative electrode current collector and includes a negative electrode active material, a binder, and a conductive agent.

The negative electrode current collector may include, but is not limited to, a metal current collector, a carbon current collector, a conductive resin current collector, a metal-resin composite current collector, and the like, more specifically, for example, copper, nickel, titanium, iron, and respective alloys thereof, stainless steel, carbon fiber, carbon nanotube (CNT), graphite, and the like.

The negative electrode active material may include one or more of graphite, hard carbon, soft carbon, mesophase carbon micro bead, graphene, silicon, and silicon dioxide. The mass content of the negative electrode active material in the negative electrode active layer may include, but is not limited to, 90-98%, for example, 95-98%, e.g., any point value of or a range value between any two of 90%, 91%, 92%, 93%, 94%, 95%, 96%, 97%, and 98%.

The conductive agent in the negative electrode sheet may include, but is not limited to, acetylene black (SP), carbon nanotube, conductive carbon black (super-P), ketjen black, carbon fiber, graphene, and the like. The mass content of the conductive agent in the active layer contained in the negative electrode sheet may include, but is not limited to, 0.5-5%, for example, 1-5%, e.g., any point value of or a range value between any two of 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, and 10%.

The negative electrode active layer further optionally includes a thickener, such as carboxymethyl cellulose (CMC). The mass content of the thickener in the active layer includes, but is not limited to, 0.5-5%, for example, 1-5%, including but not limited to, any point value of or a range value between any two of 0.5%, 1%, 1.5%, 2%, 2.5%, 3%, 3.5%, 4%, 4.5%, and 5%.

### 2. Electrolyte

The electrolyte may serve as a carrier for ion transport in the battery. In the battery of the embodiments of the present application, the electrolyte used may be a solid electrolyte, such as a polymer electrolyte and an inorganic solid electrolyte, but is not limited thereto. The electrolyte may also be an electrolyte solution. The electrolyte solution mentioned above includes a solvent and lithium salt dissolved in the solvent.

The solvent may be a non-aqueous organic solvent, for example, which may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), and ethyl butyrate (EB), and optionally includes more than two of them.

The lithium salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalate phosphate (LiDFOP), and lithium tetrafluorooxalate phosphate (LiTFOP), for example, one or more of lithium hexafluorophosphate (LiPF₆), lithium tetrafluoroborate (LiBF₄), lithium dioxalate borate (LiBOB), lithium difluoro(oxalato)borate (LiDFOB), lithium bis-trifluoromethanesulfonimide (LiTFSI), and lithium bis(fluorosulfonyl)imide (LiFSI).

The electrolyte solution further optionally includes other additives, for example, one or more of vinylene carbonate (VC), vinyl ethylene carbonate (VEC), fluoroethylene carbonate (FEC), difluoroethylene carbonate (DFEC), trifluoromethyl ethylene carbonate (TFPC), succinonitrile (SN), adiponitrile (ADN), glutaronitrile (GLN), hexane trinitrile (HTN), 1,3-propane sultone (1,3-PS), ethylene sulfate (DTD), methylene methyl disulfonate (MMDS), 1-propene-1,3-propane sultone (PST), 4-methyl ethylene sulfate (PCS), 4-ethyl ethylene sulfate (PES), 4-propyl ethylene sulfate (PEGLST), trimethylene sulfite (TS), 1,4-butane sultone (1, 4-BS), glycol sulfitee (DTO), dimethyl sulfite (DMS), diethyl sulfite (DES), sulfonic acid ester cyclic quaternary ammonium salt, tris(trimethylsilyl) phosphate (TMSP), and tris(trimethylsilyl) borate (TMSB), but is not limited thereto.

### 3. Separator

The battery further includes a separator stacked between the positive electrode sheet and the negative electrode sheet, which is used to separate the positive electrode sheet and the negative electrode sheet from each other, so that electrons in the battery cannot freely pass between them, avoiding a short circuit due to contact between the two electrodes, and allowing ions in the electrolyte to freely pass through between the positive electrode and the negative electrode.

The separator may be any porous separator with electrochemical stability and mechanical stability, such as a single-layer or multi-layer thin film of one or more of glass fiber, non-woven fabric, polyethylene (PE), polypropylene (PP) and polyvinylidene fluoride (PVDF).

### 4. Outer package

The battery may include an outer package. The outer package may be used to package an electrode assembly including the positive electrode sheet, the negative electrode sheet, and the separator, and the electrolyte.

The outer package of the battery may be a hard shell, such as a hard plastic shell, an aluminum shell, and a steel shell; and may also be a pouch, such as a bag-type pouch. The material of the pouch may be plastic, such as polypropylene, polybutylene terephthalate, and polybutylene succinate.

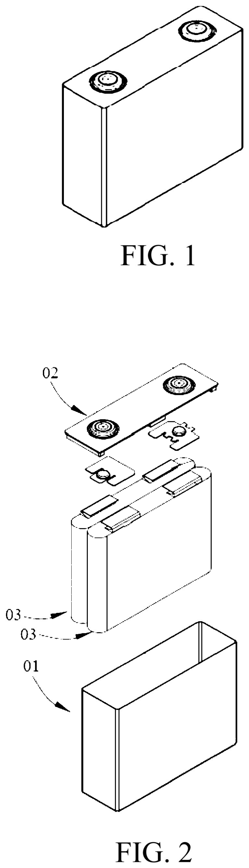

The shape of the outer package may be a cylindrical shape, a square shape, or any other shape. For example, FIG. 1 shows a battery cell having an outer package in the shape of a square structure as an example.

Referring to FIG. 2, the outer package may include a housing 01 and a cover plate 02. The housing 01 may include a bottom plate and side plates connected to the bottom plate, where the bottom plate and the side plates form an accommodating chamber by enclosing. The housing 01 has an opening communicating with the accommodating chamber, and the cover plate 02 can cover the opening to close the accommodating chamber. The positive electrode sheet, the negative electrode sheet, and the separator may be formed into an electrode assembly 03 through a winding process or a lamination process. One or more electrode assemblies 03 are packaged in the accommodating chamber. The electrode assembly 03 is impregnated in the electrolyte solution.

### 5. Battery cell, battery module, and battery pack.

The battery of the embodiments of the present application may be at least one of a battery cell, a battery module, and a battery pack. According to different packaging forms, batteries are divided into battery cells, battery modules, and battery packs. The battery cell is the most basic unit of a secondary battery, and includes an electrode assembly and an electrolyte. The electrode assembly generally includes a positive electrode sheet, a negative electrode sheet, and a separator. The positive electrode sheet and the negative electrode sheet are stacked alternately, and the separator is disposed between the positive electrode sheet and the negative electrode sheet to achieve the function of isolation, thereby obtaining a bare cell, or the bare cell may be obtained after winding. The cell is disposed in a housing, into which the electrolyte is injected, and an opening is closed to obtain a battery cell. The battery cell operates mainly relying on migration of metal ions in the electrolyte between the positive electrode sheet and the negative electrode sheet.

In some battery packaging technologies, one or more battery cells may be first integrated into a battery module, and then one or more battery modules are assembled into a battery pack. In some other battery packaging technologies, one or more battery cells may be directly mounted in a case to form a battery pack, omitting an intermediate state of a battery module, thereby reducing the quality of the battery pack and increasing an energy density of the battery.

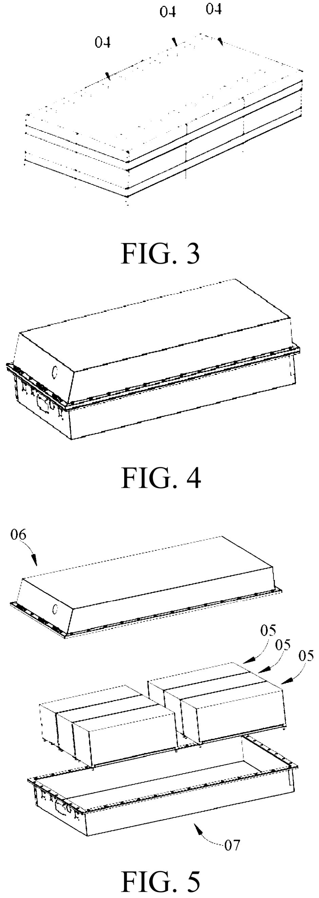

Reference is made to FIG. 3, which shows a battery module as an example. In the battery module, a plurality of battery cells 04 may be arranged sequentially in a length direction of the battery module. Certainly, the secondary batteries may alternatively be arranged in any other manner. Further, the plurality of battery cells 04 may be fastened by using fasteners.

Optionally, the battery module 4 may further include a housing having an accommodating space in which the plurality of battery cells 04 are accommodated.

Reference is made to FIG. 4 and FIG. 5, which show a battery pack as an example. The battery pack may include a battery case and a plurality of battery modules 05 disposed in the battery case. The battery case includes an upper case 06 and a lower case 07, where the upper case 06 may cover the lower case 07 and form a closed space for accommodating the battery modules 05. The plurality of battery modules 05 may be arranged in the battery case in any manner.

### [Electric device]

The embodiments of the present application further provide an electric device including the battery according to the third aspect.

The battery disclosed in the embodiments of the present application may be used in an electric device which uses a battery as a power supply or various energy storage systems each using a battery as an energy storage component, so as to provide electric energy. The battery mentioned above has the advantages of good cycling performance and long life, and therefore, the use of the battery in various electric devices facilitates improving the use experience of various electric devices.

The electric device may include, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc. As the electric device, the battery cell, the battery module, or the battery pack in the battery may be selected according to the use requirements.

FIG. 6 shows an electric devices as an example. The electric apparatus is a pure electric vehicle, a hybrid electric vehicle, a plug-in hybrid electric vehicle, or the like. In order to meet the demand for high power and high energy density of a battery by the electric apparatus, a battery pack or a battery module may be used.

Examples of the present application are described in detail below. The examples described below are illustrative, and are only used to explain the present application, but are not construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### [Examples]

### Example 1

### 1) Lithium nickel cobalt manganese oxide positive electrode sheet

This example provides a lithium nickel cobalt manganese oxide positive electrode sheet and a preparation method for the same, where the lithium nickel cobalt manganese oxide positive electrode sheet includes aluminum foil and positive electrode active layers disposed on two surfaces of the aluminum foil, and the positive electrode active layer include lithium nickel cobalt manganese oxide, conductive carbon black, carbon nanotube, and PVDF.

The preparation method for the lithium nickel cobalt manganese oxide positive electrode sheet includes the following steps:
96 wt% of lithium nickel cobalt manganese oxide (with a Ni:Co:Mn molar ratio = 8:1:1), 1.0 wt% of conductive carbon black, 0.5 wt% of carbon nanotube, and 2.5 wt% of PVDF (with a number average molecular weight of 0.6 million, i.e., 60×10⁴, a melting point of 172°C, and a decomposition temperature of 310°C) were mixed, and then N-methylpyrrolidone was added and stirred, followed by dispersion, so as to prepare a positive electrode paste containing lithium nickel cobalt manganese oxide. The positive electrode paste was applied onto aluminum foil and dried, followed by cold pressing, so as to obtain the lithium nickel cobalt manganese oxide positive electrode sheet with a double-side load of 0.6 g/1540.25 mm² and a compacted density of 3.5 g/cm³.

The product after the cold pressing was subjected to a heating treatment and a thermal insulation treatment sequentially.

In the heating treatment: the lithium nickel cobalt manganese oxide positive electrode sheet was moved at a constant speed of 20 m/min under a laser, where 2000W Nd:YAG lasers are disposed on two sides of the lithium nickel cobalt manganese oxide positive electrode sheet respectively. A surface layer of the active layer contained in the lithium nickel cobalt manganese oxide positive electrode sheet was heated to 200°C (heating temperature) with laser light.

In the thermal insulation treatment: under radiation of other two 100 W fiber lasers arranged in a moving direction of the lithium nickel cobalt manganese oxide positive electrode sheet and disposed on the two sides of the lithium nickel cobalt manganese oxide positive electrode sheet, the surface layer of the active layer contained in the lithium nickel cobalt manganese oxide positive electrode sheet was subjected to thermal insulation at 190°C (thermal insulation temperature) for 1 s (thermal insulation duration).

Thereafter, the lithium nickel cobalt manganese oxide positive electrode sheet was cooled to 25°C for rolling.

### 2) Lithium ion battery

This example further provides a lithium ion battery, which includes an electrode assembly (bare cell) including the lithium nickel cobalt manganese oxide positive electrode sheet mentioned above, a graphite negative electrode sheet, and a separator, an electrolyte solution, and an outer package. The bare cell is placed in the outer package, and impregnated in the electrolyte solution.

The lithium ion battery may be assembled in the following manner:
95 wt% of artificial graphite, 1.0 wt% of conductive carbon black, 2.0 wt% of styrene-butadiene rubber (SBR), and 2.0 wt% of sodium carboxymethyl cellulose (CMC) were mixed, and then deionized water was added and stirred, followed by dispersion, so as to prepare a negative electrode paste. Then, the negative electrode paste was applied onto Cu foil, and after application on both sides was completed, drying, cold pressing, cutting, and sheet fabricating were performed, so as to prepare the graphite negative electrode sheet.

The graphite negative electrode sheet, the separator, and the lithium nickel cobalt manganese oxide positive electrode sheet were stacked in sequence, so that the separator is located between the positive and negative electrodes to achieve the function of isolation; and winding was performed to obtain the bare cell. The bare cell was placed in the outer package, into which the prepared electrolyte solution was injected, followed by processes such as packaging, injection, formation, and venting, so as to obtain the lithium ion battery (cell).

### Example 2

This example differs from Example 1 only in that: in the preparation method for the lithium nickel cobalt manganese oxide positive electrode sheet, the moving speed of the electrode sheet is 60 m/min, the laser light power for heating is 3000 W, the heating temperature is 190°C, and the thermal insulation duration is 0.33 s. Other parameters are the same as those in Example 1.

### Example 3

This example differs from Example 1 only in that: in the preparation method for the lithium nickel cobalt manganese oxide positive electrode sheet, the moving speed of the electrode sheet is 200 m/min, the laser light power for heating is 4000 W, the heating temperature is 180°C, and the thermal insulation duration is 0.1 s. Other parameters are the same as those in Example 1.

### Example 4

This example differs from Example 3 only in that: in the preparation method for the lithium nickel cobalt manganese oxide positive electrode sheet, the thermal insulation duration is 0.5 s. Other parameters are the same as those in Example 3.

### Example 5

This example differs from Example 3 only in that: in the preparation method for the lithium nickel cobalt manganese oxide positive electrode sheet, the thermal insulation duration is 2 s. Other parameters are the same as those in Example 3.

### Example 6

This example differs from Example 1 only in that: in the preparation method for the lithium nickel cobalt manganese oxide positive electrode sheet, the lithium nickel cobalt manganese oxide has a Ni:Co:Mn molar ratio = 6:2:2, the laser light power for heating is 3500 W, the heating temperature is 210°C. Other parameters are the same as those in Example 1.

### Example 7

This example differs from Example 1 only in that: in the preparation method for the lithium nickel cobalt manganese oxide positive electrode sheet, the lithium nickel cobalt manganese oxide has a Ni:Co:Mn molar ratio = 5:2:3, the laser light power for heating is 4000 W, the heating temperature is 220°C. Other parameters are the same as those in Example 1.

### Example 8

This example differs from Example 1 only in that: in the preparation method for the lithium nickel cobalt manganese oxide positive electrode sheet, the lithium nickel cobalt manganese oxide has a Ni:Co:Mn molar ratio = 1:1:1, the laser light power for heating is 4500 W, the heating temperature is 230°C. Other parameters are the same as those in Example 1.

### Example 9

This example differs from Example 1 only in that: in the preparation method for the lithium nickel cobalt manganese oxide positive electrode sheet, the molecular weight of PVDF is 1 million, and the melting point of PVDF is 175°C. Other parameters are the same as those in Example 1.

### Example 10

This example differs from Example 1 only in that: in the preparation method for the lithium nickel cobalt manganese oxide positive electrode sheet, the molecular weight of PVDF is 1.5 million, and the melting point of PVDF is 180°C. Other parameters are the same as those in Example 1.

### Example 11

This example differs from Example 1 only in that: in the preparation method for the lithium nickel cobalt manganese oxide positive electrode sheet, the molecular weight of PVDF is 0.45 million, and the melting point of PVDF is 150°C. Other parameters are the same as those in Example 1.

### Example 12

This example differs from Example 1 only in that: in the preparation method for the lithium nickel cobalt manganese oxide positive electrode sheet, the laser in the step of heating with laser light is a Yb:YAG laser, and the laser in the step of thermal insulation laser with laser light is a CO₂ laser. Other parameters are the same as those in Example 1.

### Example 13

This example differs from Example 1 only in that: in the preparation method for the lithium nickel cobalt manganese oxide positive electrode sheet, the laser in the step of heating with laser light is a fiber laser, and the laser in the step of thermal insulation laser with laser light is an antimony arsenide laser. Other parameters are the same as those in Example 1.

### [Comparative Examples]

### Comparative Example 1

This comparative example differs from Example 1 only in that: in the preparation method for the lithium nickel cobalt manganese oxide positive electrode sheet, neither the heating treatment nor the thermal insulation treatment is performed. Other parameters are the same as those in Example 1.

### Comparative Example 2

This comparative example differs from Example 1 only in that: in the preparation method for the lithium nickel cobalt manganese oxide positive electrode sheet, the thermal insulation treatment is not performed. Other parameters are the same as those in Example 1.

### Comparative Example 3

This comparative example differs from Example 1 only in that: in the preparation method for the lithium nickel cobalt manganese oxide positive electrode sheet, the heating temperature is 320°C, and the power of the heating laser is 5500 W. Other parameters are the same as those in Example 1.

### Comparative Example 4

This comparative example differs from Example 6 only in that: in the preparation method for the lithium nickel cobalt manganese oxide positive electrode sheet, neither the heating treatment nor the thermal insulation treatment is performed. Other parameters are the same as those in Example 6.

### Comparative Example 5

This comparative example differs from Example 7 only in that: in the preparation method for the lithium nickel cobalt manganese oxide positive electrode sheet, neither the heating treatment nor the thermal insulation treatment is performed. Other parameters are the same as those in Example 7.

### Comparative Example 6

This comparative example differs from Example 8 only in that: in the preparation method for the lithium nickel cobalt manganese oxide positive electrode sheet, neither the heating treatment nor the thermal insulation treatment is performed. Other parameters are the same as those in Example 8.

### [Tests for the electrochemical performance and structure]

Tests were performed for the positive electrode sheet and the lithium ion battery of each example and comparative example, so as to obtain relevant test results.

### 1. Heating temperature, thermal insulation temperature, and thermal insulation duration

**↗Table 1 Results for electrochemical performance tests on the batteries in Examples 1-5 and Comparative Examples 1-3 (PVDF having a melting point of 172°C and a decomposition temperature of 310°C; Ni:Co:Mn = 8:1:1)**

| | Heating temperat ure (°C) | Thermal insulation temperat ure (°C) | Thermal insulation duration (s) | 1C capacity retention rate@ 500 cls | 25°C DCR @ 50% SOC | 3C capacit y retenti on rate |
|---|---|---|---|---|---|---|
| Example 1 | 200 | 190 | 1 | 97.48% | 25.6 | 91.85 % |
| Example 2 | 190 | 190 | 0.33 | 97.20% | 27.7 | 91.73 % |
| Example 3 | 180 | 190 | 0.1 | 97.35% | 28 | 91.46 % |
| Example 4 | 180 | 190 | 0.5 | 97.85% | 27.3 | 92.26 % |
| Example 5 | 180 | 190 | 2 | 97.51% | 26.1 | 92.08 % |
| Comparative Example 1 | / | / | / | 96.63% | 30.3 | 90.25 % |
| Comparative Example 2 | 200 | / | / | 96.97% | 28.1 | 91.29 % |
| Comparative Example 3 | 320 | 190 | 1 | 95.01% | 28.5 | 91.37 % |

**Table 2 Results for performance tests on the positive electrode sheets in Examples 1-5 and Comparative Examples 1-3**

| | Adhesio n of the positive electrode sheet (N/m) | Moistur e content of the positive electrod e sheet (ppm) | Liquid absorption rate of the positive electrode sheet (µg/s) | Capacity per gram of the positive electrod e sheet (mAh/g) |
|---|---|---|---|---|
| Example 1 | 27.9 | 62 | 0.0037 | 197.2 |
| Example 2 | 26.2 | 55 | 0.0038 | 196.9 |
| Example 3 | 28 | 64 | 0.0035 | 197.7 |
| Example 4 | 25.5 | 59 | 0.0037 | 197.5 |
| Example 5 | 26.8 | 65 | 0.0036 | 197.8 |
| Comparative Example 1 | 23.7 | 110 | 0.0022 | 197.1 |
| Comparative Example 2 | 23.8 | 99 | 0.0029 | 197 |
| Comparative Example 3 | 23.1 | 78 | 0.0032 | 193.3 |

The test results in Table 1 show that, in the case where neither the heating treatment nor the thermal insulation treatment is performed on the positive electrode sheet (Comparative Example 1), after the positive electrode sheet is used in a battery, the capacity retention rate of the battery after 500 cycles at 1C is 96.63%; and on that basis, when the heating treatment step is added but the thermal insulation treatment is not performed (Comparative Example 2), there is little improvement to the cycling performance of the battery, and the capacity retention rate after 500 cycles at 1C is 96.97%. After analysis with reference to the test results in Table 2, it may be seen that when only the heating treatment is performed, the electrode sheet is improved insufficiently, and a change of the adhesion in the positive electrode sheet is not large, so that the improvement to the cycling is not large.

By contrast, in Examples 1-5, by sequentially performing the heating treatment and the thermal insulation treatment during the preparation of the positive electrode sheet, the corresponding capacity retention rate of the battery after 500 cycles at 1C may be increased to 97.2% or more, as shown in FIG. 7, thereby improving the cycling performance. This is mainly because that, after the heating treatment and the thermal insulation treatment, the binder is sufficiently balanced so that the adhesion of the positive electrode sheet is enhanced, and the moisture is volatilized during the thermal insulation so that the porosity of the positive electrode sheet is increased (the increase of the liquid absorption rate reflects the increase of the porosity of the positive electrode sheet, which can improve the wettability of the positive electrode sheet); and during the heating treatment and the thermal insulation treatment, both the heating temperature and the thermal insulation temperature are lower than the decomposition temperature of the binder, so that the lithium nickel cobalt manganese oxide can remain stable and is free from impacts of impurities generated by decomposition of the binder during the heating. As reflected by the XRD diagram of the positive electrode sheet of Example 1 before and after the heating treatment and the thermal insulation treatment in FIG. 8, and the SEM diagram of the positive electrode sheet of Example 1 before and after the heating treatment and the thermal insulation treatment in FIG. 9, there are no significant changes in the crystal form, structure, and crystallinity of the lithium nickel cobalt manganese oxide after the heating treatment and the thermal insulation treatment. Under the comprehensive action of these phenomena, the interfacial performance of the positive electrode sheet is greatly improved, and the impedance of the positive electrode sheet is reduced, thereby improving the cycling performance of the battery.

During the heating treatment and the thermal insulation treatment, both the heating temperature and the thermal insulation temperature may be set in a temperature range higher than or equal to the melting point of the binder and lower than the decomposition temperature of the binder, and more specifically, may be set in the first 50% of the range between the melting point of the binder and the decomposition temperature of the binder (that is, both are set to be higher than or equal to the melting point of the binder and lower than or equal to the average of the melting point of the binder and the decomposition temperature of the binder), and the heating temperature and the thermal insulation temperature may be the same or different (the thermal insulation temperature may be higher than the heating temperature or lower than the heating temperature). In this way, the cycling performance of the battery may be improved, as shown in Examples 1-3. In the case where the thermal insulation temperature is lower than the heating temperature, the battery presents better cycling performance. However, if either of the heating temperature and the thermal insulation temperature is too high, for example, the heating temperature is set to 320°C, in Comparative Example 3, the cycling performance of the battery may be deteriorated. According to the test results in Table 2, it can be seen that this is mainly due to the decomposition of the binder caused by the excessively high temperature, which reduces the adhesion of the positive electrode sheet; and a decomposition product of the binder reacts with the active material, lithium nickel cobalt manganese oxide, and a decomposition residue remains in the electrode sheet and is not removed, thereby increasing side reactions between the positive electrode sheet and the electrolyte solution, resulting in deterioration of the interfacial performance of the positive electrode sheet.

Moreover, the cycling performance of the battery is related to the thermal insulation duration. As shown in Examples 3-5, within the range of 0.1-2 s of the thermal insulation duration, the capacity retention rate of the battery after 500 cycles at 1C first increases and then decreases with the increase of the thermal insulation duration. Therefore, appropriate thermal insulation duration may be selected to achieve better cycling performance of the battery.

In addition, the test results also reflect that, compared with Comparative Examples 1-3, the positive electrode sheets of Examples 1-5 each have a higher capacity per gram and better rate performance (higher 3C capacity retention rate), indicating that the heating treatment and thermal insulation treatment can not only improve the cycling performance of the battery, but also improve the capacity per gram and rate performance.

### 2. Ni:Co:Mn molar ratio

**Table 3 Results of electrochemical performance tests on batteries with different Ni:Co:Mn molar ratios (PVDF having a melting point of 172°C and a decomposition temperature of 310°C)**

| | Ni:Co:Mn | Heating temperature (°C) | Thermal insulation temperature (°C) | Thermal insulation duration (s) | 1C capacity retention rate@ 500 cls | 25°C DCR@ 50% SOC | 3C capacity retention rate |
|---|---|---|---|---|---|---|---|
| Example 1 | 8:1:1 | 200 | 190 | 1 | 97.48% | 25.6 | 91.85% |
| Example 6 | 6:2:2 | 210 | 190 | 1 | 97.85% | 24.3 | 94.95% |
| Example 7 | 5:2:3 | 220 | 190 | 1 | 97.92% | 24.2 | 95.02% |
| Example 8 | 1:1:1 | 230 | 190 | 1 | 97.86% | 24.9 | 95.20% |
| Comparative Example 4 | 6:2:2 | / | / | / | 96.36% | 28.9 | / |
| Comparative Example 5 | 5:2:3 | / | / | / | 96.86% | 28.3 | / |
| Comparative Example 6 | 1:1:1 | / | / | / | 96.91% | 27.8 | / |

**Table 4 Results of performance tests on positive electrode sheets with different Ni:Co:Mn molar ratios**

| | Ni:Co:Mn | Adhesion of the positive electrode sheet (N/m) | Moisture content of the positive electrode sheet (ppm) | Liquid absorption rate of the positive electrode sheet (µg/s) | Capacity per gram of the positive electrode sheet (mAh/g) |
|---|---|---|---|---|---|
| Example 1 | 8:1:1 | 27.9 | 62 | 0.0037 | 197.2 |
| Example 6 | 6:2:2 | 26.2 | 54 | 0.0035 | 182.1 |
| Example 7 | 5:2:3 | 27.1 | 49 | 0.0039 | 175.3 |
| Example 8 | 1:1:1 | 25.8 | 50 | 0.0034 | 152.4 |
| Comparative Example 4 | 6:2:2 | 23.3 | 106 | 0.0023 | / |
| Comparative Example 5 | 5:2:3 | 23.6 | 116 | 0.0021 | / |
| Comparative Example 6 | 1:1:1 | 23.8 | 94 | 0.0022 | / |

It can be seen from the test results in Table 3 that the method of sequentially performing the heating treatment and the thermal insulation treatment during the preparation is applicable to the preparation of positive electrode sheets with different Ni:Co:Mn molar ratios, each of which may improve the cycling performance of the battery. For example, the capacity retention rate after 500 cycles at 1C in Example 6 is higher than that in Comparative Example 4 with the same Ni:Co:Mn molar ratio in which neither the heating treatment nor the thermal insulation treatment is performed; the capacity retention rate after 500 cycles at 1C in Example 7 is higher than that in Comparative Example 5 with the same Ni:Co:Mn molar ratio in which neither the heating treatment nor the thermal insulation treatment is performed; and the capacity retention rate after 500 cycles at 1C in Example 8 is higher than that in Comparative Example 6 with the same Ni:Co:Mn molar ratio in which neither the heating treatment nor the thermal insulation treatment is performed. Similarly, this is mainly because that, after the heating treatment and the thermal insulation treatment, the binder is sufficiently balanced so that the adhesion of the positive electrode sheet is enhanced, and the moisture is volatilized during the thermal insulation so that the porosity of the positive electrode sheet is increased, the interfacial performance of the positive electrode sheet is greatly improved, and the impedance of the positive electrode sheet is reduced, eventually improving the cycling performance of the battery.

Similar to Examples 1-5, for positive electrode sheets with different Ni:Co:Mn molar ratios, after the heating treatment and the thermal insulation treatment, in addition to the excellent battery cycling performance, a high capacity per gram and good rate performance of the positive electrode sheet are also presented.

### 3. Molecular weight and melting point of the binder

**Table 5 Results of electrochemical performance tests on batteries with different binders (PVDF having a decomposition temperature of 310°C; Ni:Co:Mn = 8:1:1)**

| | PVDF molecular weight (ten thousand) | PVDF melting point (°C) | Heating temperature (°C) | Thermal insulation temperature (°C) | Thermal insulation duration (s) | 1C capacity retention rate @500cls | 25°C DCR@ 50% SOC | 3C capacity retention rate |
|---|---|---|---|---|---|---|---|---|
| Example 1 | 60 | 172 | 200 | 190 | 1 | 97.48% | 25.6 | 91.85% |
| Example 9 | 100 | 175 | 200 | 190 | 1 | 97.86% | 27.9 | 91.88% |
| Example 10 | 150 | 180 | 200 | 190 | 1 | 97.64% | 27.9 | 91.92% |
| Example 11 | 45 | 150 | 200 | 190 | 1 | 97.43% | 27.6 | 91.77% |

The test results in Table 5 reflect that, with the use of PVDF having different molecular weights and different melting points, the batteries all have good cycling performance and rate performance after the positive electrode sheets are subjected to the heating treatment and the thermal insulation treatment.

### 4. Laser

**Table 6 Results of electrochemical performance tests on batteries with different lasers (PVDF having a melting point of 172°C and a decomposition temperature of 310°C; Ni:Co:Mn = 8:1:1)**

| | Heating laser | Heating laser light wavelengt h (nm) | Thermal insulation laser | Thermal insulation laser light wavelengt h (nm) | Heating temperatur e (°C) | Thermal insulation temperatur e (°C) | Thermal insulatio n duration (s) | 1C capacity retentio n rate @500cl s | 25°C DCR @ 50% SOC | 3C capacity retentio n rate |
|---|---|---|---|---|---|---|---|---|---|---|
| Exampl e 1 | Nd:YA G | 1064 | Fiber | 1080 | 200 | 190 | 1 | 97.48% | 25.6 | 91.85% |
| Exampl e 12 | Yb:YA G | 1030 | CO₂ | 10.6 µm | 200 | 190 | 1 | 97.49% | 28 | 92.05% |
| Exampl e 13 | Fiber | 1080 | Antimon y arsenide | 940 | 200 | 190 | 1 | 97.47% | 25.9 | 91.94% |

It can be seen from Table 6 that, both the cycling performance and the rate performance of the battery can be improved by performing the heating treatment and the thermal insulation treatment on the positive electrode sheet using a laser that can emit infrared wavelength laser light or near-infrared wavelength laser light.

### [Performance test methods]

### (1) Adhesion of the positive electrode sheet

The positive electrode sheet is cut into a test sample of a size of 20*100 mm² for later use; a double-sided tape is adhered to a side of the sample to be tested, and compacted with a press roller to completely adhere the double-sided tape to the sample; the other side of the double-sided tape on the sample is adhered to a stainless steel surface, and an end of the sample is bent reversely at a bending angle of 180°; and a high-iron tensile machine is used to perform a test, where an end of stainless steel is fixed to a lower clamp of the tensile machine, the bent end of the sample is fixed to an upper clamp, an angle of the sample is adjusted to ensure that upper and lower ends are located perpendicularly, then the sample is stretched at a speed of 50 mm/min until the entire sample is peeled off from a base plate, a displacement and an action force during the process are recorded, and a force in the case of a force balance is generally regarded as the adhesion of the positive electrode sheet.

### (2) Liquid absorption rate of the positive electrode sheet

The positive electrode sheet is fixed on a clean glass plate, a 0.3 mm capillary is used to suck an electrolyte solution of a height of 3 mm (1mol·L⁻¹ LiPF₆, EC:DMC:EMC mass ratio = 1:1:1), and then perpendicularly come into contact with the positive electrode sheet to cause the electrode sheet to absorb the electrolyte solution, and duration of completely absorbing the electrolyte solution is measured, and the rate of absorbing the electrolyte solution is calculated.

### (3) Capacity per gram and 1C capacity retention rate of the positive electrode sheet

One side of the positive electrode sheet is washed with N-methylpyrrolidone or deionized water, and then the positive electrode sheet is die-cut into a single-sided circular electrode sheet with a diameter of 14 mm and weighed; and a current collector substrate corresponding to the circular sheet with a diameter of 14 mm is weighed to obtain a total load. An active material load is calculated according to a electrode sheet formulation.

A 2032 button cell provided with a negative electrode shell, foamed nickel, a lithium sheet with a diameter of 16 mm, a Celgard 2325 separator with a diameter of 18 mm, 0.1g of 1mol·L⁻¹ LiPF₆ EC:DMC:EMC (mass ratio 1:1:1) electrolyte solution, a single-sided circular electrode sheet with a diameter of 14 mm (an active material side faces to the separator), and a 2032 button cell provided with a positive electrode shell are assembled to form a 2032 button cell. The assembled button cell is tested after left to stand for 12 h: at 25°C, the button cell is charged with a current of 0.1C to an upper limit voltage of the positive active material, then charged with a constant voltage of the upper limit voltage until the current is less than 0.05C, then the charge is stopped, after left to stand for 5 min, the button cell is discharged with a current of 0.1C to a lower limit voltage of the positive active material, and a discharge capacity (i.e., an initial discharge capacity C₀₎ is recorded. The initial discharge capacity divided by a load amount of the positive active material is the capacity per gram of the positive electrode sheet.

The button cell is charged at 25°C with a current of 1C to the upper limit voltage of the positive active material, then charged with a constant voltage of the upper limit voltage until the current is less than 0.05C, then the charge is stopped, after left to stand for 5 min, the button cell is discharged with a current of 1C to a lower limit voltage of the positive active material, and a discharge capacity is recorded as C₁. The test method is performed for 500 cycles, and a discharge capacity C₅₀₀ at this time is recorded. The 1C capacity retention rate @500cls = (C₁-C₅₀₀)/C₁*100% is calculated according to C₅₀₀ and C₁.

### (4) Moisture content of the positive electrode sheet

The positive electrode sheet to be tested is cut into fragments each having a length and a width both less than 5 mm, and 0.6 to 1g of the cut positive electrode sheet fragments are placed in a dry penicillin bottle. Karl Fischer anolyte and Karl Fischer catholyte are added to a titration cup at a volume ratio of 20:1, and a generator electrode, an indicator electrode, and an air guide tube in the titration cup are connected to a Karl Fischer moisture tester. A test temperature is set to 170°C, an actual weight of the electrode sheet, an air inlet flow rate is 40 mL/min, the drifting is started at 10 µg/min, the drifting is stopped at 20 µg/min, and after stabilization time of 20 s, the moisture content of the positive electrode sheet may be obtained.

### (5) Discharge rate (3C capacity retention rate)

The cell is left to stand at 25°C for 30 min; discharged with a constant current of 0.33C to 2.8 V, and then discharged with a constant current of 0.33C to 2.8 V; left to stand at 25°C for 1 hour; charged with a constant current of 0.33C to a cut-off voltage (the charge cut-off voltage in Examples 6-8 and Comparative Examples 4-6 is 4.35 V, and the charge cut-off voltage in other Examples and Comparative Examples is 4.25 V); and then charged with a constant voltage of the cut-off voltage, where a cut-off current is 0.05C.

The above steps are repeated once. A 0.33C discharge capacity C_{0.33} is recorded.

The cell is left to stand at 25°C for 30 min, then discharged with 3C to 2.8 V, and left to stand at 25°C for 1 hour, and a 3C discharge capacity C₃ is recorded. The 3C capacity retention rate = (C_{0.33}-C₃)/C_{0.33}*100% is calculated according to C_{0.33} and C₃.

### (6) Direct current impedance (25°C DCR@ 50%SOC)

The cell is left to stand at 25°C for 30 min, charged with a constant current of 0.33C to the cut-off voltage (the charge cut-off voltage in Examples 6-8 and Comparative Examples 4-6 is 4.35 V, and the charge cut-off voltage in other Examples and Comparative Examples is 4.25 V), and then charged with a constant voltage of the cut-off voltage, where the cut-off current is 0.05C, and the state of charge (SOC) of the battery is 100% at this time.

The cell is left to stand at 25°C for 5 min, discharged with 0.33C, with a cut-off current of 0.5C, and the SOC is adjusted to 50%. The cell is left to stand at 25°C for 1 h, and a voltage V1 is recorded.

The 5C discharge is performed for 30 s, and a voltage V2 and a current I of the 5C constant current discharge are recorded.

The cell is left to stand at 25°C for 40 s, and charged with a constant current of 3.75C for 30 s. The cell is left to stand at 25°C for 1 h, charged with a constant current of 0.33C to the cut-off voltage (the charge cut-off voltage in Examples 6-8 and Comparative Examples 4-6 is 4.35 V, and the charge cut-off voltage in other Examples and Comparative Examples is 4.25 V), and then charged with a constant voltage of the cut-off voltage, where the cut-off current is 0.05C. The cell is left to stand at 25°C for 5 min, and a voltage V1' is recorded.

Then, the cell is discharged with 0.33C, where the cut-off current is 0.9C, and the SOC is adjusted to 50%. The cell is left to stand at 25°C for 1 h and discharged with 5C for 30 s, and a voltage V2' and a current I' of the 5C constant current discharge are recorded.

The cell is left to stand at 25°C for 40 s, then charged with a constant current of 3.75C for 30 s, and left to stand at 25°C for 5 min. The above steps may be repeated multiple times.

The direct current impedance of the cell in the 5C constant current discharge of 30 s at 25°C with 50% SOC, i.e., 25°C DCR@ 50%SOC = (V2-Vl)/I =(V2'-V1')/I'.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that no structural conflict is present. The present application is not limited to the specific embodiments disclosed ++herein, but includes all technical solutions falling within the scope of the claims.

## Claims

1. A preparation method for an electrode sheet, comprising:
preparing an active layer comprising an active material and a binder on at least one side of a current collector;
performing a heating treatment on the active layer to cause a temperature of a surface layer of the active layer to rise to a heating temperature; and
performing a thermal insulation treatment on the active layer to cause the surface layer of the active layer to be at a thermal insulation temperature, wherein
each of the heating temperature and the thermal insulation temperature is separately higher than or equal to a melting point or a softening point of the binder and lower than a decomposition temperature of the binder.

2. The preparation method for an electrode sheet according to claim 1, wherein each of the heating temperature and the thermal insulation temperature is separately lower than or equal to an average of the melting point or the softening point of the binder and the decomposition temperature of the binder.

3. The preparation method for an electrode sheet according to claim 1 or 2, wherein duration of the thermal insulation treatment is greater than or equal to 0.1 s, optionally 0.1-2.5 s.

4. The preparation method for an electrode sheet according to any one of claims 1 to 3, wherein the thermal insulation temperature is lower than or equal to the heating temperature.

5. The preparation method for an electrode sheet according to any one of claims 1 to 4, wherein the melting point or the softening point of the binder is 140-180°C, the decomposition temperature of the binder is 300-350°C, and each of the heating temperature and the thermal insulation temperature is separately 170-230°C, optionally 190-230°C.

6. The preparation method for an electrode sheet according to claims 1 to 5, wherein the active material comprises lithium nickel cobalt manganese oxide; and optionally, in the lithium nickel cobalt manganese oxide, a molar ratio of Ni, Co, and Mn is (1-8):(1-2):(1-3).

7. The preparation method for an electrode sheet according to claims 1 to 6, wherein a number average molecular weight of the binder is (35-150)×10⁴, optionally (45-150)×10⁴.

8. The preparation method for an electrode sheet according to any one of claims 1 to 7, wherein each of the heating treatment and the thermal insulation treatment separately comprises a radiation treatment with laser light.

9. The preparation method for an electrode sheet according to claim 8, wherein the laser light comprises one or both of infrared wavelength laser light and near-infrared wavelength laser light, and optionally, the wavelength of the laser light is 1000 nm to 15 µm.

10. The preparation method for an electrode sheet according to claim 8 or 9, wherein a laser light power in the step of the heating treatment is 2000-4500 W, optionally 2000-4000 W.

11. The preparation method for an electrode sheet according to any one of claims 8 to 10, wherein a laser light power in the step of the thermal insulation treatment is 80-200 W, optionally 100-150 W.

12. The preparation method for an electrode sheet according to any one of claims 1 to 11, further comprising a step of a compaction treatment on the electrode sheet after the thermal insulation treatment.

13. An electrode sheet obtained by the preparation method according to any one of claims 1 to 12.

14. A battery, comprising the electrode sheet according to claim 13.

15. An electric device, comprising the battery according to claim 14.
